# EUROPÄISCHE PATENTSCHRIFT

(11) **EP 2 059 655 B1**
(45) Veröffentlichungstag und Bekanntmachung des Hinweises auf die Patenterteilung: **17.02.2010**
(21) Anmeldenummer: 07786865.1
(22) Anmeldetag: 27.06.2007
(51) Int. Cl.: F01D 5/18, F01D 25/12

(54) **GEKÜHLTE TURBINENLAUFSCHAUFEL**
COOLED TURBINE ROTOR BLADE
AUBE MOBILE REFROIDIE POUR TURBINES

(30) Priorität: 04.09.2006 EP 06018490
(43) Veröffentlichungstag der Anmeldung: 20.05.2009
(73) Patentinhaber: SIEMENS AKTIENGESELLSCHAFT, 80333 München (DE)
(72) Erfinder: GROSS, Heinz-Jürgen, 45478 Mülheim An Der Ruhr (DE)
(86) Internationale Anmeldenummer: PCT/EP2007/056425
(87) Internationale Veröffentlichungsnummer: WO 2008/028702

(56) Entgegenhaltungen:
- DE-A1- 4 443 696
- GB-A- 2 106 996
- US-A- 5 246 340
- US-A1- 2005 084 370

## Beschreibung

Die Erfindung betrifft eine gekühlte Turbinenlaufschaufel gemäß dem Oberbegriff des Anspruchs 1.

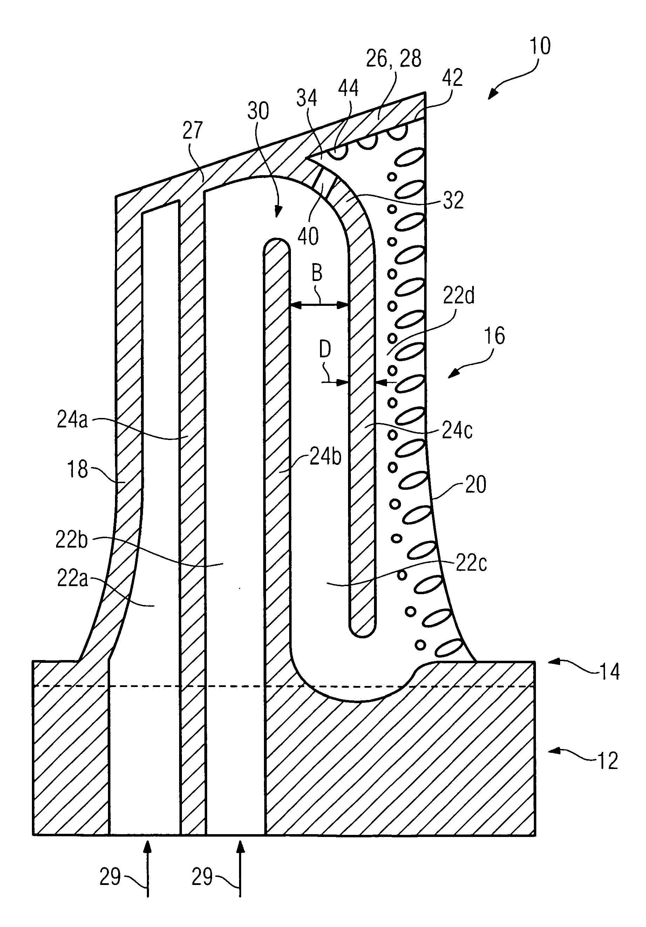

Beispielsweise ist eine gattungsgemäße Turbinenlaufschaufel mit einem Tragflügelprofil aus der EP 0 735 240 A1 bekannt. Zur Kühlung des Tragflügelprofils sind im Inneren mehrere, zueinander benachbarte Kühlkanäle vorgesehen, welche mäanderförmig angeordnet von einem Kühlmittel sequentiell durchströmbar sind. Die Kühlkanäle verlaufen dabei jeweils parallel zur Vorderkante. Jeweils benachbarte Kühlkanäle sind durch Rippen voneinander getrennt, wobei in einem Umlenkungsbereich, in dem die benachbarten Kühlkanäle ineinander übergehen, die Rippen enden. Um in diesen Umlenkungsbereichen, in denen die Kühlluft beispielsweise von einer nach außen gerichteten Strömung in eine nach innen gerichtete Strömung umgelenkt wird, Gebiete mit geringeren Strömungsgeschwindigkeiten und demzufolge unzureichender Kühlung zu vermeiden, sind in diesen Stellen Umlenkblätter (FIG 12) vorgesehen. Trotz der Umlenkblätter kann es aber weiterhin sein, dass im Umlenkbereich lokale Überhitzungen auftreten können, was dann die Lebensdauer der Turbinenschaufel reduziert.

Weiter ist eine Turbinenschaufel aus der US 5,246,340 bekannt, die mehrere zueinander parallele Kühlkanäle im Innern aufweist. Die Kühlkanäle sind dabei jeweils von einer Rippe getrennt. In einer der Rippen ist im Bereich der Schaufelspitze eine zwei benachbarte Kühlkanäle verbindende Öffnung vorgesehen, durch die eine Querströmung zur Prallkühlung der Schaufelblattspitze durchtreten kann.

Die GB 2 106 996 offenbart zudem eine Turbinenschaufel mit einem blechförmigen Prallkühleinsatz.

Die US 2005/0 084 370 offenbart eine gekühlte Turbinenschaufel nach dem Oberbegriff des Anspruchs 1.

Aufgabe der vorliegenden Erfindung ist die Bereitstellung einer Turbinenlaufschaufel, deren Lebensdauer weiter verbessert ist.

Die auf die Bereitstellung einer gattungsgemäßen Turbinenlaufschaufel gerichtete Aufgabe wird gelöst, indem diese gemäß dem kennzeichnenden Teil des Anspruchs 1 ausgebildet ist. Es wird vorgeschlagen, dass zumindest eine der Rippen - vom Befestigungsbereich zum Spitzenbereich gesehen - eine im Wesentlichen gleich bleibende Rippendicke aufweist und unter Bildung eines im Längsschnitt spitzwinkligen Kühlkanal-Eckenbereichs im Bereich der Flügelspitze zur Vorderkante oder Hinterkante hin gekrümmt ist und
dass zumindest eine in der Krümmung angeordnete, zwei benachbarte Kühlkanäle verbindende Öffnung vorgesehen ist, durch die ein Teil der Kühlmittelströmung des zum Eckbereich benachbarten Kühlkanals in den spitzwinkligen Eckenbereich des Kühlkanals überströmbar ist.

Aufgrund der gekrümmten Rippe erfolgt die Umlenkung der durch die Kühlkanäle strömenden Kühlluft wesentlich aerodynamischer. Die Umlenkung wird integraler Bestandteil der Rippe, so dass die Gebiete mit geringerer oder fehlender Strömungsgeschwindigkeit (Totwassergebiete) im Umlenkbereich beseitigt werden können. Die Strömungsgeschwindigkeit wird folglich in demjenigen Kühlkanal annähernd konstant gehalten, zu dem sich die Rippe hin krümmt. Durch die Krümmung der Rippe entsteht jedoch im benachbarten Kühlkanal ein spitzwinkliger Eckenbereich, in dem sich nun seinerseits Totwassergebiete einstellen könnten. Um nun die Totwassergebiete im benachbarten Kühlkanal im Eckenbereich zu vermeiden, ist weiter zumindest eine in der Krümmung angeordnete, die beiden benachbarten Kühlkanäle verbindende Öffnung vorgesehen, durch die ein Teil der Kühlmittelströmung von einem Kühlkanal in den anderen Kühlkanal vorzeitig übertreten bzw. überströmen kann.

Außerdem kann die in der gekrümmten Rippe angeordnete Öffnung besonders einfach hergestellt werden. Die zum Gießen der Turbinenlaufschaufel verwendete Gießvorrichtung umfasst zur Herstellung der von einem Kühlmittel durchströmbaren Hohlräume einen Gusskern, welcher mäanderförmig angeordnete Kernelemente aufweist. Um diese benachbarten, mäanderförmig angeordneten Kernelemente gegeneinander abzustützen, kann eine Kernstütze zwischen zwei benachbarten Kernelementen vorgesehen sein, welche nach dem Entfernen des Gusskerns aus der gegossenen, einstückigen Turbinenschaufel die Öffnung innerhalb der gekrümmten Rippe hinterlässt. Hierdurch wird ein stabilisierter Gusskern angegeben, was die Genauigkeit es Herstellungsverfahrens erhöht.

Weitere vorteilhafte Ausgestaltungen der Erfindung sind in den Unteransprüchen angegeben.

In einer besonders vorteilhaften Ausgestaltung kann außerdem die ebenfalls häufig lokalen Überhitzungen ausgesetzte Abschlusswand, welche auch als Kronenboden bezeichnet wird, aufgrund des durch die Öffnung durchtretenden Kühlmittelstrahls prallgekühlt werden, so dass hierdurch ebenfalls eine besonders effiziente Kühlung der Abschlusswand erfolgen kann. Hierzu ist lediglich die Öffnung derartig zu neigen, dass ihre Längserstreckung auf die Abschlusswand gerichtet ist.

Vorzugsweise ist die zur Hinterkante benachbarte Rippe im Bereich der Flügelspitze gekrümmt. Dabei ist die Rippe - vom Befestigungsbereich zum Spitzenbereich gesehen - zur Vorderkante hin gekrümmt, so dass in einem Teil des Umlenkungsbereichs zwischen zwei benachbarten Kühlmittelkanälen eine im Wesentlichen gleich bleibende Strömungsquerschnittsfläche bereitgestellt werden kann. Dies reduziert die Druckverluste im Kühlmittel. Um eine besonders leichte Turbinenlaufschaufel zu erhalten, weist die Rippe entlang ihrer Krümmung eine im Wesentlichen gleich bleibende Rippendicke auf.

In einer vorteilhaften Weiterbildung der Erfindung ist die Innenseite der Abschlusswand mit Turbulatoren ausgestattet, wodurch die Kühlung der Abschlusswand bzw. des Kronenbodens in einfacher Art und Weise verbessert werden kann. Je nach Ausgestaltung der Turbinenlaufschaufel ist es möglich, dass die benachbarten Kühlkanäle sequentiell oder auch parallel von einem Kühlmittel durchströmbar sind. Bei parallel durchströmten Kühlmittelkanälen ist darauf zu achten, dass ein ausreichendes Druckgefälle zwischen diesen vorhanden ist, um einen sich durch die Öffnung einstellenden Kühlmittelstrom zu erhalten.

Die Erfindung wird anhand einer Zeichnung erläutert. Die einzige Figur zeigt dabei einen Längsschnitt durch eine erfindungsgemäße Turbinenlaufschaufel mit mäanderförmig angeordneten Kühlkanälen.

Die Figur zeigt eine im Gießverfahren hergestellte Turbinenlaufschaufel 10 in einem Längsschnitt. Die somit einstückige Turbinenlaufschaufel 10 weist einen im Querschnitt tannenbaumförmigen Befestigungsbereich 12 mit einer Plattform 14 sowie ein daran angeordnetes Tragflügelprofil 16 auf. Das im Querschnitt aerodynamisch profilierte Tragflügelprofil 16 wird von einer saugseitigen Schaufelwand und einer druckseitigen Schaufelwand gebildet, die sich jeweils von einer Vorderkante 18 zu einer Hinterkante 20 erstrecken und dabei einen im Inneren des Tragflügelprofils 16 angeordneten Hohlraum umschließen, in dem mehrere Kühlkanäle 22a, 22b, 22c, 22d vorgesehen sind. Die Kühlkanäle 22 sind zueinander benachbart und verlaufen jeweils annähernd parallel zur Vorderkante 18. Die zueinander benachbarten Kühlkanäle 22 sind jeweils durch eine die druckseitige Schaufelwand mit der saugseitigen Schaufelwand verbindende Rippe 24a, 24b, 24c abschnittsweise voneinander getrennt. Im Bereich der Flügelspitze 27, welche dem Befestigungsbereich 12 gegenüberliegt, sind die Kühlkanäle 22 von einer Abschlusswand 28 begrenzt. Die Abschlusswand 28 wird auch als Kronenboden bezeichnet.

Die in der Figur dargestellte Turbinenlaufschaufel 10 weist einen vorderkantenseitigen Kühlkanal 22a auf, dem befestigungsseitig ein Kühlmittel 29, beispielsweise Kühlluft oder Kühldampf, zuführbar ist. Die zugeführte Kühlluft kühlt den Bereich der Vorderkante 18 des Tragflügelprofils 16 mit gängigen Kühlmethoden, wie beispielsweise Konvektionskühlung, Prallkühlung und/oder Filmkühlung.

Das dem Kühlkanal 22b fußseitig zuführbare Kühlmittel 29 strömt entlang des Kanals 22b zur Flügelspitze 27 und wird anschließend in einem Umlenkbereich 30 zur Umkehrung seiner Strömungsrichtung, nämlich zum Befestigungsbereich 12 hin umgelenkt. Hierzu ist die zur Hinterkante 20 benachbarte Rippe 24c im Bereich der Flügelspitze 27 bei gleich bleibender Rippendicke D gekrümmt. Die Krümmung 32 ist derart, dass sich die Rippe 24c - vom Befestigungsbereich 12 zum Spitzenbereich 26 gesehen - zur Vorderkante 18 hin krümmt. Hierdurch erhält ein Teil des Umlenkbereichs 30 eine im Vergleich zum Kühlkanal 22c annähernd gleich bleibende Kühlkanalbreite B. Dadurch kann eine besonders aerodynamische Umlenkung des die Kühlkanäle 22b, 22c sequentiell durchströmenden Kühlmittels 29 erreicht werden.

Aufgrund der Krümmung 32 der zur Hinterkante 20 benachbarten Rippe 24c ist im Kühlkanal 22d im Bereich der Flügelspitze 27 ein spitzwinkliger Eckenbereich 34 gebildet. In der Rippe 24c ist im Bereich der Krümmung 32 eine Öffnung 40 vorgesehen, durch die das im Umlenkbereich 30 strömende Kühlmittel 29 aufgrund des sich einstellenden Druckverhältnisses teilweise aus diesem heraus und in den Eckenbereich 34 einströmen kann. Ggf. können auch mehrere Öffnungen 40 vorgesehen sein, um gezielter die Strömung in den Eckenbereichen 34 zu beeinflussen. Somit kann der Eckenbereich 34 ausreichend gekühlt werden. Bereiche mit geringeren Kühlmittel-Strömungsgeschwindigkeiten und demzufolge mit unzureichender Kühlung werden an dieser Stelle somit sicher vermieden.

Der durch die Öffnung 40 durchtretende Kühlmittelstrahl prallt auf die Innenseite 42 der Abschlusswand 28 auf und ruft dabei eine Prallkühlung der Flügelspitze 27 hervor. Um die Kühlwirkung des Prallkühlungsstrahls weiter zu verbessern, können auf der Innenseite 42 der Abschlusswand 28 zudem Turbulatoren 44 vorgesehen sein, die eine weitere Vergrößerung der zu kühlenden Oberfläche herbeiführen. Außerdem kann das entlang der Innenseite 42 der Abschlusswand 28 vorbeiströmende Kühlmittel 29 den kühlluftseitigen Wärmeübergangskoeffizienten aufgrund der Anfachung der Turbulenz weiter vergrößern, wodurch eine weiter gesteigerte Kühlung des Kronenbodens erreicht werden kann.

Auch ist denkbar, die Rippe 24a im Spitzenbereich 26 der Turbinenlaufschaufel 10 erfindungsgemäß in Richtung der Hinterkante 20 gekrümmt in die Abschlusswand 28 übergehen zu lassen und ebenfalls in der Krümmung eine oder mehrere Öffnungen vorzusehen.

Insgesamt wird mit der Erfindung eine Turbinenlaufschaufel 10 für eine, insbesondere stationäre, axial durchströmte Gasturbine angegeben, welche mit einem Befestigungsbereich 12, einem Tragflügelprofil 16 und mehreren im Inneren des Tragflügelprofils 16 mäanderförmig angeordneten Kühlkanälen 22 ausgestattet ist. Um Bereiche mit geringeren Strömungsgeschwindigkeiten von Kühlmittel 29 im Umlenkungsbereich 30 oder am Kanalende zu vermeiden, schlägt die Erfindung vor, dass zumindest eine der Rippen 24 bei gleich bleibender Rippendicke D im Bereich der Flügelspitze 27 zur Vorderkante 18 oder zur Hinterkante 20 hin gekrümmt verläuft, und dass in der Krümmung 32 der Rippe 24 mindestens eine Öffnung 40 vorgesehen ist, durch die ein Teil des im Umlenkbereich 30 strömenden Kühlmittels 29 in den benachbarten Kühlkanal 22d durchtreten kann.

## Patentansprüche

1. Gekühlte Turbinenlaufschaufel (10) für eine stationäre, axial durchströmte Gasturbine,
mit einem Befestigungsbereich (12), von dem aus sich ein von einer saugseitigen Schaufelwand und einer druckseitigen Schaufelwand gebildetes Tragflügelprofil (16) bis zu einer Flügelspitze (27) hin erstreckt,
wobei das Tragflügelprofil (16) eine Vorderkante (18) und eine Hinterkante (20) aufweist,
mit im Inneren des Tragflügelprofils (16) zueinander benachbarten Kühlkanälen (22),
welche durch jeweils eine, die druckseitige Schaufelwand mit der saugseitigen Schaufelwand verbindende, sich vom Befestigungsbereich (12) zur Flügelspitze (27) hin erstreckende Rippe (24a, 24b, 24c) zumindest teilweise voneinander getrennt sind, und
mit einer die Kühlkanäle (22) spitzenseitig begrenzenden Abschlusswand (28),
**dadurch gekennzeichnet, dass**
zumindest eine der Rippen (24c) - vom Befestigungsbereich (12) zum Spitzenbereich (26) gesehen - eine im Wesentlichen gleich bleibende Rippendicke (D) aufweist und unter Bildung eines im Längsschnitt spitzwinkligen Kühlkanal-Eckenbereichs im Bereich der Flügelspitze (27) zur Vorderkante (18) oder Hinterkante (20) hin gekrümmt ist und
dass zumindest eine in der Krümmung (32) angeordnete, zwei benachbarte Kühlkanäle (22c, 22d) verbindende Öffnung (40) vorgesehen ist, durch die ein Teil der Kühlmittelströmung (29) des zum Eckbereich benachbarten Kühlkanals (22c) in den spitzwinkligen Eckenbereich des Kühlkanals (22d) überströmbar ist.

2. Turbinenlaufschaufel (10) nach Anspruch 1,
bei der die zur Hinterkante (20) benachbarte Rippe (24c) im Bereich der Flügelspitze (27) gekrümmt ist.

3. Turbinenlaufschaufel (10) nach Anspruch 1 oder 2,
bei der die Öffnung derartig angeordnet ist, dass die Abschlusswand prallkühlbar ist.

4. Turbinenlaufschaufel (10) nach Anspruch 1, 2 oder 3, deren Innenseite (42) der Abschlusswand (28) mit Turbulatoren (44) ausgestattet ist.

5. Turbinenlaufschaufel (10) nach einem der vorangehenden Ansprüche,
bei der die Kühlkanäle (22a, 22b, 22c, 22d) sequentiell oder parallel von dem Kühlmittel (29) durchströmbar sind.

6. Turbinenlaufschaufel (10) nach einem der vorangehenden Ansprüche, welche gegossen ist.

## Claims

1. Cooled turbine rotor blade (10) for a stationary axial-flow gas turbine,
having an attachment area (12) from which an airfoil profile (16), which is formed by a suction-side blade wall and a pressure-side blade wall, extends as far as an airfoil tip (27),
wherein the airfoil profile (16) has a leading edge (18) and a trailing edge (20),
having cooling channels (22) which are adjacent to one another in the interior of the airfoil profile (16),
which cooling channels (22) are at least partially separated from one another by in each case one rib (24a, 24b, 24c) which connects the pressure-side blade wall to the suction-side blade wall and extends from the attachment area (12) to the airfoil tip (27), and
having a terminating wall (28), which bounds the cooling channels (22) at the tip end,
**characterized in that**
at least one of the ribs (24c) - seen from the attachment area (12) to the tip area (26) - has an essentially constant rib thickness (D) and is curved toward the leading edge (18) or trailing edge (20) forming a cooling-channel corner area, which has an acute angle in longitudinal section, in the area of the airfoil tip (27), and **in that**
at least one opening (40) is provided, which is arranged in the curvature (32), connects two adjacent cooling channels (22c, 22d) and through which a part of the coolant flow (29) of the cooling channel (22c) which is adjacent to the corner area can flow into the acute-angled corner area of the cooling channel (22d) .

2. Turbine rotor blade (10) as claimed in Claim 1,
in which the rib (24c) which is adjacent to the trailing edge (20) is curved in the area of the airfoil tip (27).

3. Turbine rotor blade (10) as claimed in Claim 1 or 2,
in which the opening is arranged such that the terminating wall can be impingement-cooled.

4. Turbine rotor blade (10) as claimed in Claim 1, 2 or 3, the inner face (42) of the terminating wall (28) of which is equipped with turbulators (44).

5. Turbine rotor blade (10) as claimed in one of the preceding claims,
in which the coolant (29) can flow sequentially or in parallel through the cooling channels (22a, 22b, 22c, 22d).

6. Turbine rotor blade (10) as claimed in one of the preceding claims, which is cast.

## Revendications

1. Aube ( 10 ) mobile refroidie de turbine pour une turbine à gaz fixe et parcourue axialemént,
comprenant une partie ( 12 ) de fixation, de laquelle s'étend jusqu'à une pointe ( 27 ) d'aile un profil ( 16 ) aérodynamique, formé d'une paroi d'aube d'intrados et d'une paroi d'aube d'extrados,
dans lequel le profil ( 16 ) aérodynamique a un bord ( 18 ) avant et un bord ( 20 ) arrière,
comprenant des canaux ( 22 ) de refroidissement voisins les uns des autres à l'intérieur du profil ( 16 ) aérodynamique,
qui sont séparés les uns des autres au moins en partie par respectivement une nervure ( 24a, 24b ; 24c ) reliant la paroi d'aube d'intrados à la paroi d'aube d'extrados et s'étendant de la partie ( 12 ) de fixation jusqu'à la pointe ( 27 ) de l'aile, et
comprenant une paroi ( 28 ) de fermeture, délimitant du côté de la pointe les canaux ( 22 ) de refroidissement,
**caractérisée en ce que**
au moins l'une des nervures ( 24c ) a, considérée de la partie ( 12 ) de fixation à la partie ( 26 ) de pointe, une épaisseur D de nervure restant sensiblement constante et est courbée vers le bord ( 18 ) avant ou vers le bord ( 20 ) arrière dans la partie de la pointe ( 27 ) de l'aile en formant une zone de coin de canal de refroidissement à angle aigu en coupe longitudinale et **en ce qu'**il est prévu au moins une ouverture ( 40 ) disposée dans la courbure ( 32 ) et mettant en communication deux canaux ( 22c, 22d ) de refroidissement voisins, ouverture par laquelle une partie du courant ( 29 ) de fluide de refroidissement du canal ( 22c ) de refroidissement voisin de la zone de coin peut être transférée dans la zone de coin à angle aigu du canal ( 22d ) de refroidissement.

2. Aube ( 10 ) mobile de turbine suivant la revendication 1, dans laquelle la nervure ( 24c ) voisine du bord arrière est courbée dans la partie de la pointe ( 27 ) de l'aile.

3. Aube ( 10 ) mobile de turbine suivant la revendication 1 ou 2, dans laquelle l'ouverture est disposée de façon à ce que la paroi de fermeture puisse être refroidie par rebondissement.

4. Aube ( 10 ) mobile de turbine suivant la revendication 1, 2 ou 3, dont la face ( 42 ) intérieure de la paroi ( 28 ) de fermeture est équipée de dispositifs ( 44 ) créant de la turbulence.

5. Aube ( 10 ) mobile de turbine suivant l'une des revendications précédentes, dans laquelle les canaux ( 22a, 22b, 22c, 22d) de refroidissement peuvent être parcourus séquentiellement ou parallèlement par le fluide ( 29 ) de refroidissement.

6. Aube ( 10 ) mobile de turbine suivant l'une des revendications précédentes, qui est coulée.
